# EUROPEAN PATENT APPLICATION

(11) **EP 1 980 388 A1**
(43) Date of publication of application: **15.10.2008**
(21) Application number: 07707586.9
(22) Date of filing: 29.01.2007
(51) Int. Cl.: B29C 65/08, G11B 23/113

(54) **METHOD FOR MANUFACTURING PLASTIC COMPONENT ASSEMBLY AND PLASTIC COMPONENT ASSEMBLY, AND PLASTIC COMPONENT-WELDED HEAD AND PLASTIC COMPONENT WELDING MACHINE**

(30) Priority: 31.01.2006 JP 2006023130
(71) Applicant: VICTOR COMPANY OF JAPAN, LIMITED, Yokohama-shi, Kanagawa-ken, 221-8528 (JP)
(72) Inventor: SUZUKI, Kazuhiko, Yokohama-shi, Kanagawa 221-8528 (JP)
(74) Representative: Carstens, Dirk Wilhelm
(86) International application number: PCT/JP2007/051355
(87) International publication number: WO 2007/088800

(57) **Abstract**

A lower half (102) and an upper half (103) are plastic components having thermoplasticity. A welding head (1) having a plurality of convex portions formed in a circumferential direction, the convex portions extending in a longitudinal direction within a range of a predetermined length, is inserted so as to span a lower boss (107) and an upper boss (110) in a joint portion (105). The plastic in the joint portion (105) is melted by means of the welding head (1). The lower half (102) and the upper half (103) are welded to and integrated with each other by solidifying the molten plastic.

## Description

### Technical Field

The present invention relates to a method of manufacturing a plastic component assembly for joining a pair of plastic components having thermoplasticity to form a plastic component assembly, a plastic component assembly formed by joining a pair of plastic components having thermoplasticity, and a plastic component welding head and a plastic component welding machine for joining a pair of plastic components by ultrasonic waves or heat.

### Background Art

A tape-shaped recording medium such as a videotape or an audio tape is usually housed in a case composed of a plastic component, while a disk-shaped recording medium such as an optical disk or a magneto-optical disk may also be housed in the case composed of a plastic component. A tape-shaped recording medium housed in a case is called a cassette, while a disk-shaped recording medium housed in a case is called a cartridge. Hereinafter, a plastic component for housing an object to be housed is referred to as a container.

Such a container typically includes a pair of plastic components (a pair of container halves), wherein this pair of plastic components are often joined by screw-fastening using a tap screw in a sate where an object to be housed is housed in between the pair of plastic components. The one obtained by joining and assembling a pair of plastic components is referred to as a plastic component assembly. Moreover, usually, one of the pair of plastic components is referred to as an upper case while the other is referred to as a lower case. Usually, a hole for inserting a tap screw therethrough is formed in the lower case and a hole for screwing the tap screw therein is formed in the upper case, in advance. In contrast to this, the hole for inserting a tap screw therethrough may be formed in the upper case while the hole for screwing the tap screw therein may be formed in the lower case. These holes formed in advance may be referred to as a pilot hole.

Although the joint between a pair of plastic components by such a screw-fastening has an advantage that the mutual joint strength is high, it has a problem that the cost of tap screws increases as the number of screw-fastening portions increases. Moreover, although the screw-fastening work is currently almost automated, the work time for screw-fastening is relatively long and it is therefore difficult to improve the productivity of the plastic component assembly. Furthermore, if the work accuracy in screw-fastening, that is the degree of screw-fastening, varies, the joint strength may not be uniform at a plurality of screw-fastening portions and thus a problem may occur in the quality of the plastic component assembly.

The examples of methods of joining a pair of plastic components capable of solving these problems include ultrasonic welding as described in Japanese Utility Model Application Laid-open Publication No. H06 (1994)-58480. According to the method of joining a pair of plastic components using the ultrasonic welding, the tap screw is not required and thus the cost can be reduced and further the work time for joining the plastic components can be reduced and therefore the productivity can be improved. Moreover, since the screw-fastening is not required, the quality of the plastic component assembly can be improved.

However, for the joint by ultrasonic welding, the joint strength between the pair of plastic components is not so high although we can expect the above-described effects. That is, with the joining method by the conventional ultrasonic welding, it is difficult to obtain a joint strength to the extent that can be employed as an alternative to the joining method by screw-fastening. A plastic component assembly housing an object to be housed needs to have a joint strength capable of passing reliability tests such as a drop impact test. With the joining method by the conventional ultrasonic welding, the joint strength capable of passing the reliability tests cannot be obtained and thus there is a need for a joining method by ultrasonic welding (or heat welding) capable of significantly improving the joint strength.

### Disclosure of the Invention

The present invention has been made in view of such problems. It is an object of the present invention to provide a method of manufacturing a plastic component assembly, which can significantly improve the joint strength of a pair of plastic components in the case where the pair of plastic components is welded to form a plastic component assembly by ultrasonic waves or heat. It is another object of the present invention to provide a plastic component assembly, which is formed by welding a pair of plastic components by ultrasonic waves or heat, the pair of plastic components being joined by a high joint strength and having significantly improved quality of the joint strength. It is yet another object of the present invention to provide a plastic component welding head and a plastic component welding machine suitable in achieving such a plastic component assembly and a method of manufacturing the plastic component assembly.

In order to solve the above-described problems of the conventional art, the present invention provides a method of manufacturing a plastic component assembly in which a first and a second plastic components having thermoplasticity are integrated to form a plastic component assembly, the method comprising: inserting a welding head used for ultrasonic or heat welding so as to span a joint portion where the first and the second plastic components abut to each other, the welding head having a plurality of convex portions formed in a circumferential direction, the convex portions extending in a longitudinal direction within a range of a predetermined length; melting a plastic in the joint portion by means of the welding head; and solidifying the molten plastic and thereby causing the first and second plastic components to be welded and integrated with each other.

Here, as the welding head, a welding head having a plurality of concave portions formed in a circumferential direction in addition to the convex portions, the concave portions extending in a longitudinal direction within a range of a predetermined length, is preferably used.

Moreover, it is preferable that the first plastic component includes a first boss having a hole with a first inner diameter formed in a bottom portion; the second plastic component includes a second boss with a second inner diameter not greater than the first inner diameter; and the joint portion includes a portion where the bottom portion of the first boss and the second boss abut to each other, and further that the welding head, in which a diameter of a circumcircle circumscribing the plurality of convex portions is larger than the first inner diameter at least at a part within the range of the predetermined length, is used as the welding head.

Furthermore, a welding head, in which in which a diameter of a circle contacting the respective innermost portions of the plurality of concave portions is smaller than the second inner diameter at least at a part within the range of the predetermined length, is preferably used as the welding head.

Moreover, a welding head, in which a taper portion whose diameter becomes smaller toward an end of the welding head is formed in the plurality of convex portions at least at a part within the range of the predetermined length, is preferably used as the welding head.

Furthermore, a welding head, in which a side edge portion of a top surface of the plurality of convex portions is inclined relative to a center line in a longitudinal direction of the welding head at least at a part within the range of the predetermined length, is preferably used as the welding head.

Furthermore, a welding head, in which the respective innermost portions of the plurality of concave portions have a diameter becoming smaller toward an end of the welding head at least at a part within the range of the predetermined length, is preferably used as the welding head.

In order to solve the above-described problems of the conventional art, the present invention provides a plastic component assembly comprising: a first plastic product having thermoplasticity; and a second plastic component having thermoplasticity and integrated with the first plastic component: wherein the first and second plastic components are joined to each other at a joint portion where the first and second plastic components abut to each other;
wherein a void portion spanning the first and second plastic components is formed in the joint portion; and wherein a solidified plastic faces the void portion integrally with the first and second plastic components so as to span the first and second plastic components, the solidified plastic being obtained by solidifying a molten plastic in which the first and second plastic components are melted.

Here, it is preferable that the first plastic component includes a first boss having a hole with a first inner diameter formed in a bottom portion; the second plastic component includes a second boss with a second inner diameter not greater than the first inner diameter; the joint portion includes a portion where the bottom portion of the first boss and the second boss abut to each other; and the void portion extends over the second boss from the bottom portion of the first boss, and the solidified plastic extends over the second boss from the bottom portion of the first boss.

Moreover, the void portion preferably has a plurality of convex portions and a plurality of concave portions in a circumferential direction.

In order to solve the above-described problems of the conventional art, the present invention provides a plastic component welding head used for welding a first and a second plastic components having thermoplasticity by ultrasonic waves or heat, the plastic component welding head comprising: a cylindrical root portion; and an end portion integrally continuous to the root portion, wherein the end portion has a plurality of convex portions and a plurality of concave portions in a circumferential direction, the convex portions and the concave portions extending within a range of a predetermined length in a longitudinal direction.

Here, the plurality of convex portions has a taper portion, a diameter of which becomes smaller toward an end of the plastic component welding head, at least at a part within a range of the predetermined length.

The taper portion preferably comprises: a first taper portion positioned on an end side of the plastic component welding head and inclined with a first inclination angle; and a second taper portion positioned on the root portion side than the first taper portion and inclined with a second inclination angle gentler than the first inclination angle.

Moreover, a side edge portion of a top surface of the plurality of convex portions is preferably inclined relative to a center line in a longitudinal direction of the plastic component welding head at least at a part within the range of the predetermined length.

Furthermore, for the respective innermost portions of the plurality of concave portions, a diameter thereof preferably becomes smaller toward an end of the plastic component welding head at least at a part within the range of the predetermined length.

In order to solve the above-described problems of the conventional art, the present invention provides a plastic component welding machine used for welding a first and a second plastic components having thermoplasticity by ultrasonic waves, the plastic component welding machine comprising: an oscillator that generates an electrical oscillation signal; an ultrasonic vibration generator that generates a mechanical ultrasonic vibration based on the oscillation signal; and a welding head, the welding head provided integrally with the ultrasonic vibration generator or attached as a separate component to the ultrasonic vibration generator, that ultrasonically weldes the first and second plastic components by the ultrasonic vibration,
wherein the welding head includes: a cylindrical root portion; and an end portion integrally continuous to the root portion, and wherein the end portion has a plurality of convex portions and a plurality of concave portions in a circumferential direction, the convex portions and the concave portions extending within a range of a predetermined length in a longitudinal direction.

Here, the plurality of convex portions preferably has a taper portion, a diameter of which becomes smaller toward an end of the welding head, at least at a part within the range of the predetermined length.

The taper portion preferably includes: a first taper portion positioned on an end side of the welding head and inclined with a first inclination angle; and a second taper portion positioned on the root portion side than the first taper portion and inclined with a second inclination angle gentler than the first inclination angle.

Moreover, a side edge portion of a top surface of the plurality of convex portions is preferably inclined relative to a center line in a longitudinal direction of the welding head at least at a part within the range of the predetermined length.

Furthermore, for the respective innermost portions of the plurality of concave portions, a diameter thereof preferably becomes smaller toward an end of the welding head at least at a part within the range of the predetermined length.

According to the method of manufacturing a plastic component assembly of the present invention, the joint strength of a pair of plastic components can be significantly improved in the case where the pair of plastic components is welded to form a plastic component assembly by ultrasonic waves or heat.

According to the plastic component assembly of the present invention, a plastic component assembly, which is formed by welding a pair of plastic components by ultrasonic waves or heat, the pair of plastic components being joined by a high joint strength and having significantly improved quality of the joint strength, can be provided.

According to the plastic component welding head and the plastic component welding machine of the present invention, the joint strength of a pair of plastic components can be improved significantly, and a pair of plastic components are joined by a high joint strength, thus providing a plastic component assembly having significantly improved quality of the joint strength.

### Brief Description of the Drawings

[Fig. 1] Fig.1 is an external perspective view of a cassette according to the present invention.
[Fig.2] Fig.2 is a partial cross-sectional view of the cassette according to the present invention.
[Fig.3] Fig.3(A) is a perspective view of a plastic component welding head according to a first embodiment of the present invention. Fig.3(B) is a cross-sectional view of the plastic component welding head according to the first embodiment of the present invention.
[Fig.4] Fig.4 is a plan view of a plastic component welding head according to a modification of the first embodiment of the present invention.
[Fig.5] Fig.5 is a configuration diagram of a plastic component welding machine according to the present invention.
[Fig.6] Fig.6 is a vertical partial cross-sectional view illustrating a state where the plastic component welding head according to the first embodiment of the present invention is inserted into a joint portion of the cassette.
[Fig.7] Fig.7 is a horizontal partial cross-sectional view illustrating a state where the plastic component welding head according to the first embodiment of the present invention is inserted into the joint portion of the cassette.
[Fig.8] Fig.8 is a horizontal partial cross-sectional view of the joint portion of the cassette after welding an upper half and a lower half of the cassette by means of the plastic component welding head according to the first embodiment of the present invention.
[Fig.9] Fig.9(A) is a perspective view of a plastic component welding head according to a second embodiment of the present invention. Fig. 9 (B) is a side view of the plastic component welding head according to the second embodiment of the present invention.
[Fig. 10] Fig.10(A) is a perspective view of a plastic component welding head according to a third embodiment of the present invention. Fig.10(B) is a plan view of the plastic component welding head according to the third embodiment of the present invention. Fig.10(C) is a side view of the plastic component welding head according to the third embodiment of the present invention. Fig.10(D) is a vertical cross-sectional view of the plastic component welding head according to the third embodiment of the present invention.
[Fig. 11] Fig. 11 is a side view of the plastic component welding head according to the third embodiment of the present invention.
[Fig.12] Fig.12 is a vertical partial cross-sectional view illustrating a state where the plastic component welding head according to the third embodiment of the present invention is inserted into the joint portion of the cassette.
[Fig. 13] Fig.13 is a horizontal partial cross-sectional view illustrating a state where a plastic component welding head according to a fourth embodiment of the present invention is inserted into the joint portion of the cassette.
[Fig.14] Fig.14 is a horizontal cross-sectional view of the oint portion of the cassette after welding the upper half and the lower half of the cassette by the plastic component welding head according to the fourth embodiment of the present invention.
[Fig.15] Fig.15 is a side view of a peel tester according to the present invention.
[Fig.16] Fig.16 is a partially enlarged side view of the peel tester according to the present invention.

### Best Modes for Carrying Out the Invention

Hereinafter, a method of manufacturing a plastic component assembly and a plastic component assembly, and a plastic component welding head and a plastic component welding machine of the present invention will be described with reference to the accompanying drawings. Note that, in the embodiments described below, as a plastic component assembly, a cassette used for a videotape is taken as an example, however, the plastic component assembly is not limited to the cassette, and the present invention can be applied to any plastic component assembly for joining a pair of plastic components having thermoplasticity. Moreover, either of ultrasonic welding and heat welding can be used in the method of manufacturing a plastic component assembly of the present invention, and the plastic component welding machine of the present invention may be either an ultrasonic welding machine or a heat welding machine. In the present embodiments, description will be made focusing on the ultrasonic welding.

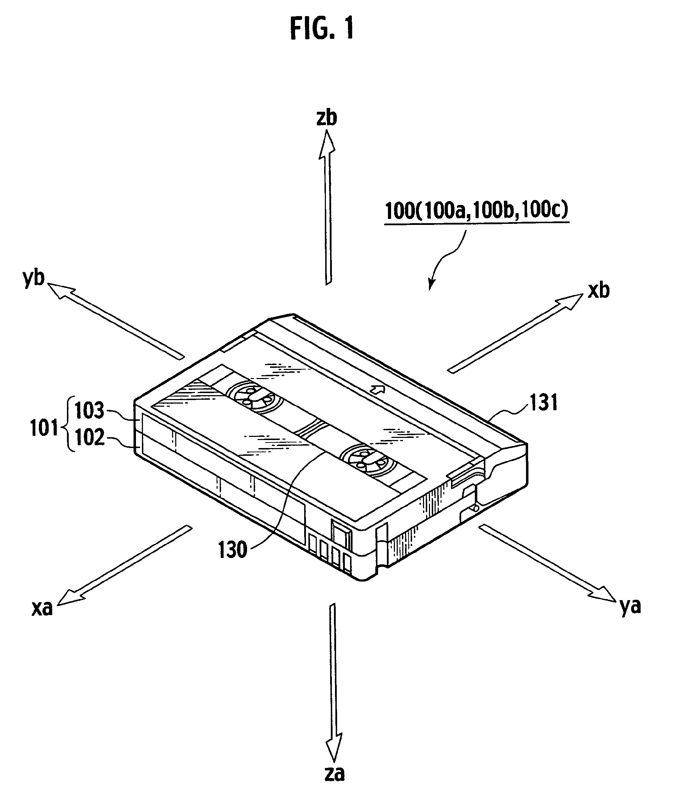

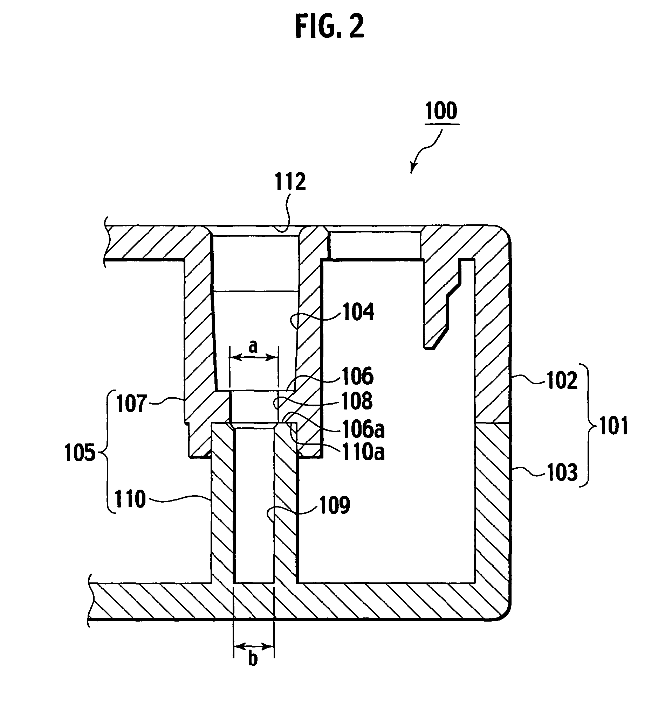

First, the structure of a cassette 100 used for an ordinary videotape is described using Fig.1 and Fig.2.

As shown in Fig.1, the cassette 100 is a plastic component assembly formed by joining a lower half 102 and an upper half 103, which are plastic components having thermoplasticity. The lower half 102 and the upper half 103 constitute a container 101 for housing a videotape 130 or other components. A part of the videotape 130 is exposed outside the container 101, and a front surface portion of the container 101 is provided with an opening and closing lid 131 which covers the exposed portion for dust control.

Fig.2 is a partial cross-sectional view of the cassette 100, with the lower half 102 illustrated on the upper side and the upper half 103 illustrated on the lower side. The container 101 includes a joint portion 105 for fixing the lower half 102 and the upper half 103 to each other. The joint portion 105 is provided at a plurality of places (e.g., 4 to 5 places) for one container 101, and the plurality of joint portions 105 has substantially the same shape relative to each other.

The specific configuration of the joint portion 105 is described. In the lower half 102, a substantially cylindrical lower boss 107 having a closed-end hole 104, which is formed at a predetermined depth from an opening 112, is formed integrally with the lower half 102. In a bottom portion 106 of the closed-end hole 104, a through-hole 108 with a diameter "a" passing through the bottom portion 106 is formed. The joint portion 105 is provided for fixing the lower half 102 and the upper half 103 to each other with a conventional tap screw. Accordingly, the lower boss 107 has an inner diameter through which the head of a tap screw can pass, and the through-hole 108 has a diameter through which the thread portion of the tap screw can pass. Here, the diameter "a" is set to 1.5 mm.

On the other hand, in the upper half 103, a substantially cylindrical upper boss 110 having a closed-end hole 109 with a diameter "b" is formed integrally with the upper half 103. The closed-end hole 109 may be a through-hole. The outer diameter of the upper boss 110 is substantially the same as the inner diameter of an end portion of the lower boss 107, and an end portion of the upper boss 110 can be inserted into the end portion of the lower boss 107. Having the lower half 102 and the upper half 103 oppose to each other, the end portion of the upper boss 110 is inserted into the interior of the end portion of the lower boss 107, and as shown in Fig.2, if the both of the lower half 102 and the upper half 103 are integrated so that an end surface 110a of the upper boss 110 may abut against a surface (under surface) 106a on the upper boss 110 side of the bottom portion 106 of the closed-end hole 104 of the lower boss 107, then the center of the through-hole 108 of the lower boss 107 substantially coincides with the center of the closed-end hole 109 of the upper boss 110 and thus the lower half 102 and the upper half 103 can be aligned precisely.

As described above, since the joint portion 105 is originally provided so as to fix the lower half 102 and the upper half 103 to each other with a tap screw, the closed-end hole 109 has a diameter capable of screwing the tap screw into the interior of the upper boss 110 and thereby fixing the lower boss 107 and the upper boss 110 to each other. Accordingly, a relation between the diameter "a" of the through-hole 108 of the lower boss 107 and the diameter "b" of the closed-end hole 109 of the upper boss 110 is a≥b. Here, the diameter "b" is set to 1.2 mm.

As described in detail later, according to the method of manufacturing a plastic component assembly of the present invention, taking advantage of the lower boss 107 and the upper boss 110 in the joint portion 105, which are conventionally provided for fixing the lower half 102 and the upper half 103 to each other with a tap screw, the lower half 102 and the upper half 103 can be joined to form a plastic component assembly by ultrasonic welding. Accordingly, a pair of plastic components formed so as to fix the both to each other with a tap screw can be replaced with the manufacture method of the present invention without adding a new structure. Of course, in the case of a plastic component without the tap screw hole, the manufacture method of the present invention can be readily employed by forming a similar hole. Moreover, the manufacture method of the present invention can be employed also for a plastic component not provided with a hole similar to the tap screw hole.

### (First Embodiment)

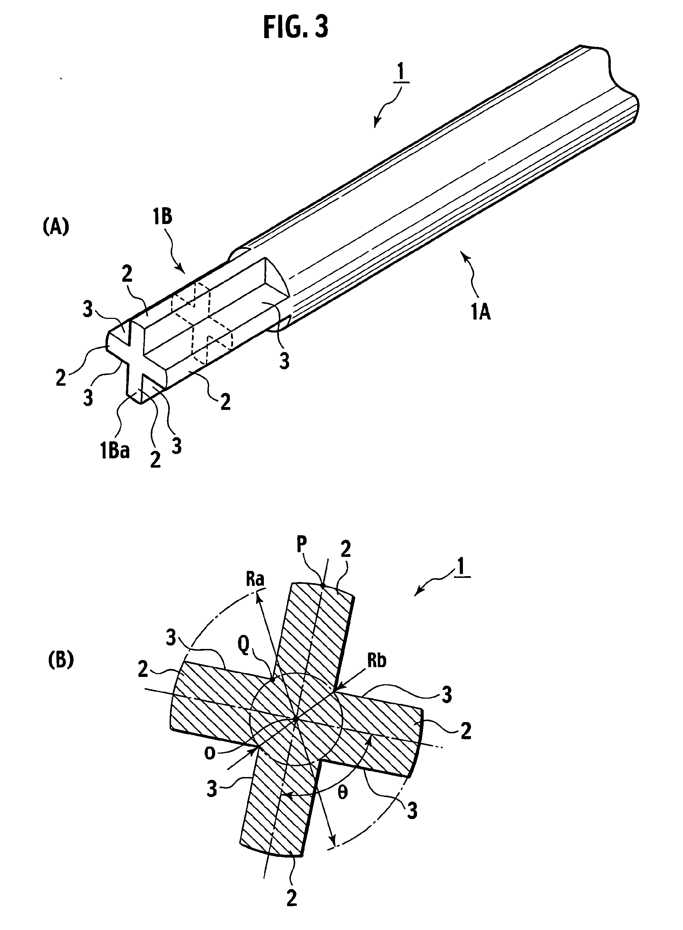

Fig.3 illustrates a first embodiment of a plastic component welding head (hereinafter, abbreviated as a welding head) used to implement the method of manufacturing a plastic component assembly of the present invention. Fig.3(A) is a perspective view illustrating a welding head 1 of a first embodiment, and Fig.3(B) is a cross-sectional view of a portion indicated by a dashed line in Fig.3(A).

As shown in Figs. 3 (A) and 3 (B), the welding head 1 has a substantially cylindrical contour, and includes a cylindrical root portion 1A and an end portion 1B having the later-described concavo-convex shape unique to the first embodiment. The end portion 1B is integrally continuous to the root portion 1A. The end portion 1B is substantially crisscross when viewed from an end surface 1Ba. That is, the end portion 1B of the welding head 1 includes four convex portions 2 radially projecting from the center of the cylinder, and four concave portions 3 between two adjoining convex portions 2. The convex portions 2 and the concave portions 3 extend within a range of a predetermined length from the end surface 1Ba in the longitudinal direction of the welding head 1. A crossing angle θ of the center lines of the two adjoining convex portions 2 is approximately 90°. The welding head 1 with the end portion 1B having these convex portions 2 and concave portions 3 formed therein can be manufactured by grinding the end portion of a substantially cylindrical metal material at four places within a range of a predetermined length and thereby forming cutouts.

As shown in Fig. 3 (B) , let the value of the diameter of a circumcircle contacting a point P, which is the farthest position from the center point O (center of the cylinder) of the four convex portions 2, be Ra, and the value of the diameter of an incircle contacting a point Q (innermost portion of the concave portion 3), which is the closest position from the center point O in the concave portion 3, be Rb, then a relation of Ra>a and Rb<b is preferably satisfied. Here, Ra is set to 2.0 mm and Rb to 0.49 mm.

As described in detail later, in ultrasonically welding the lower boss 107 and the upper boss 110 to each other using the welding head 1, molten plastic is pushed away by the welding head 1 by satisfying the above-described relation, and this pushed-away molten plastic will flow into a gap between the welding head 1 and the upper boss 110 as well as into a gap between the welding head 1 and the lower boss 107, thus filling these gaps. Accordingly, the molten plastic can be prevented from flowing into an unnecessary portion. This molten plastic is solidified and thereby the resultant solidified plastic will serve as a reinforcement material of the joint between the lower boss 107 and the upper boss 110. Accordingly, the joint strength in the joint portion 105 can be significantly increased as compared with the conventional art as described in Japanese Utility Model Application Laid-open Publication No.H06 (1994)-58480.

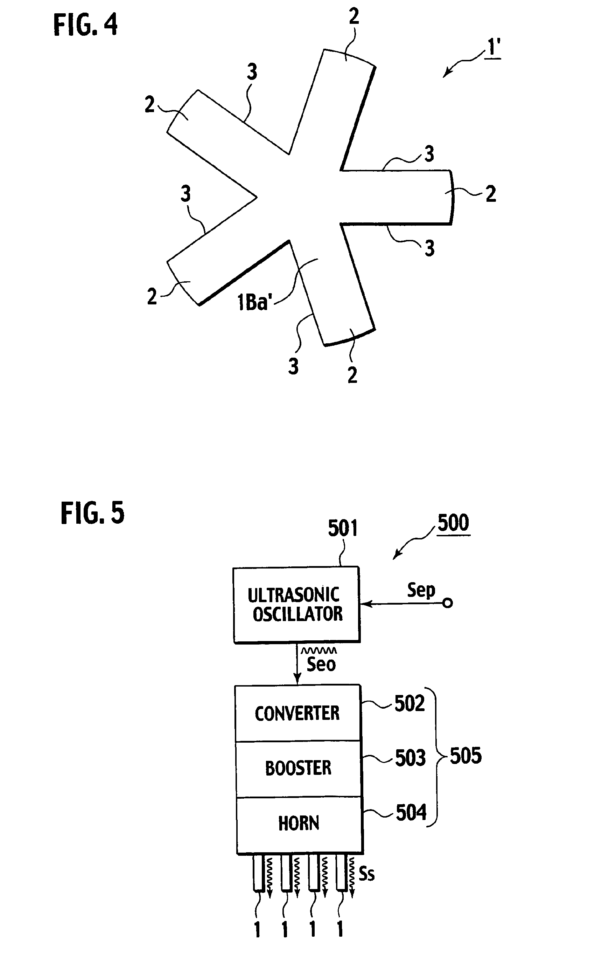

Fig.4 shows a welding head 1', which is a modification of the welding head 1, where only end surface 1Ba' of the welding head 1' is illustrated. In the welding head 1 shown in Fig.3, four convex portions 2 are arranged substantially in a crisscross pattern while in the welding head 1' shown in Fig.4, five convex portions 2 are circumferentially arranged at substantially equal intervals. Although two or more convex portions 2 are good enough, three or more ones are preferable. The plurality of convex portions 2 need not necessarily be provided circumferentially at equal intervals, however, it is more preferable to provide them circumferentially at equal intervals.

While the material for forming the welding heads 1, 1' is not limited in particular, a material excellent in wear resistance is preferably selected. Aluminum alloy (e.g., duralumin), copper, stainless steel, or the like can be used as such material. Moreover, the wear resistance can be improved by using hard chromium plating or the like on the portion (the end portion 1B) contacting the plastic components of the welding heads 1, 1'. The surface of the portion contacting the plastic components of the welding heads 1, 1' is preferably as smooth as possible. If the surface of the portion contacting the plastic components is smooth, the mold-release characteristic in having the welding heads 1, 1' retreat from the plastic components after the ultrasonic welding will improve. The end surfaces 1Ba, 1Ba' of the welding heads 1, 1' may be provided integrally or separately with a substantially hemispherical or substantially conical chip. In this manner. The welding heads 1, 1' can be smoothly inserted into the interior of the boss 107 and the upper boss 110.

Here, using Fig. 5, a plastic component welding machine (hereinafter, referred to as an ultrasonic welding machine) for ultrasonically welding the lower half 102 and the upper half 103 to each other using the welding head 1 is described. In Fig.5, an ultrasonic welding machine 500 includes an ultrasonic oscillator 501, a converter 502, a booster 503, and a horn 504. The horn 504 is provided integrally with the welding head 1, or the welding head 1, which is another component than the horn 504, is attached to the horn 504. A plurality of welding heads 1 corresponding to the number of the joint portions 105 are preferably provided in the horn 504 so that the plurality of joint portions 105 in the container 101 can be ultrasonically welded at once.

An alternating-current electric signal Sep is supplied to the ultrasonic oscillator 501 from an alternating-current power supply, and the ultrasonic oscillator 501 generates an electrical oscillation signal Seo at 20 kHz. This oscillation signal Seo is supplied to the converter 502 and is converted into a mechanical vibration. The converter 502, the booster 503, and the horn 504 are mechanically connected to each other, and the vibration generated by the converter 502 is amplified by the booster 503 and is transmitted to the horn 504. In this manner, the welding head 1 generates an ultrasonic vibration Ss. The lower boss 107 and the upper boss 110 are ultrasonically welded to each other by the ultrasonic vibration Ss. Note that the converter 502, the booster 503, and the horn 504 serve as an ultrasonic vibration generator 505 for generating a mechanical vibration based on the electrical oscillation signal Seo and transmitting the ultrasonic vibration Ss to the welding head 1.

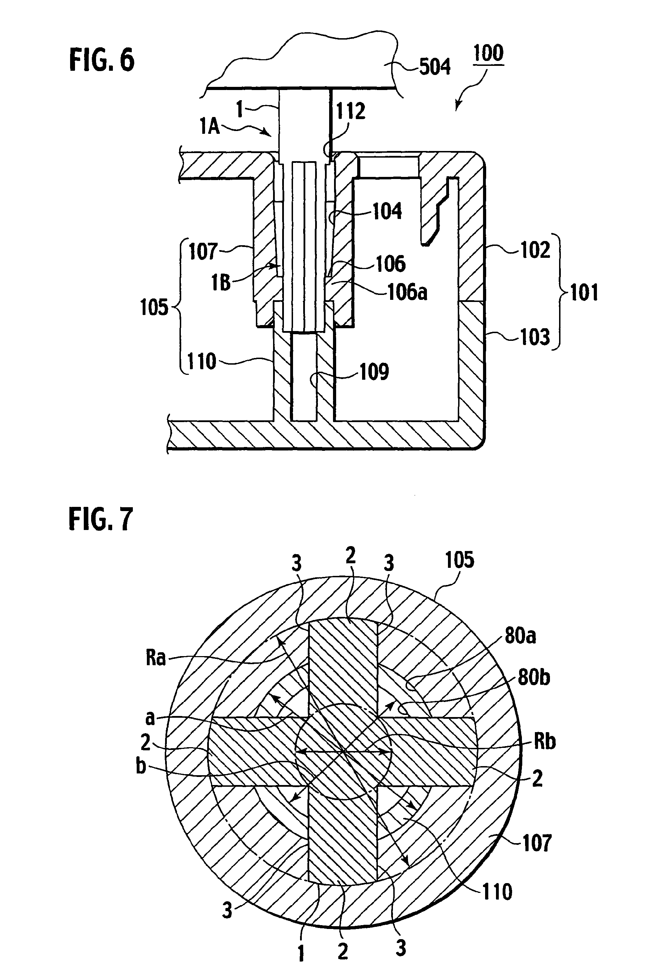

Next, using Fig.6 to Fig.8, a method of joining the lower half 102 and the upper half 103 to each other (method of manufacturing a plastic component assembly) using the welding head 1 is described. Fig. 6 illustrates a state where the welding head 1 is inserted to predetermined positions inside the lower boss 107 and the upper boss 110. Note that, in Fig.6, for ease of understanding, the container 101 is illustrated as a cross-sectional view and the welding head 1 is illustrated as a side view.

In the state illustrated in Fig.2, the welding head 1 is inserted toward the interior of the closed-end hole 104 of the lower boss 107 from the opening 112 of the lower half 102 so that the end surface 1a of the welding head 1 is abutted against a surface (upper surface) 106b on the opening 112 side of the bottom portion 106 of the closed-end hole 104. Then, the portion abutting the welding head 1 in the bottom portion 106 will be melt due to vibration energy of the welding head 1. Fig.6 illustrates a state where the end surface 1a of the welding head 1 reached the end portion of the upper boss 110 beyond the end surface 110a of the upper boss 110. Upon reaching the state of Fig.6, the ultrasonic vibration of the welding head 1 is stopped, and the welding head 1 is pulled upward so as to retreat from the interior of the upper boss 110 and the lower boss 107.

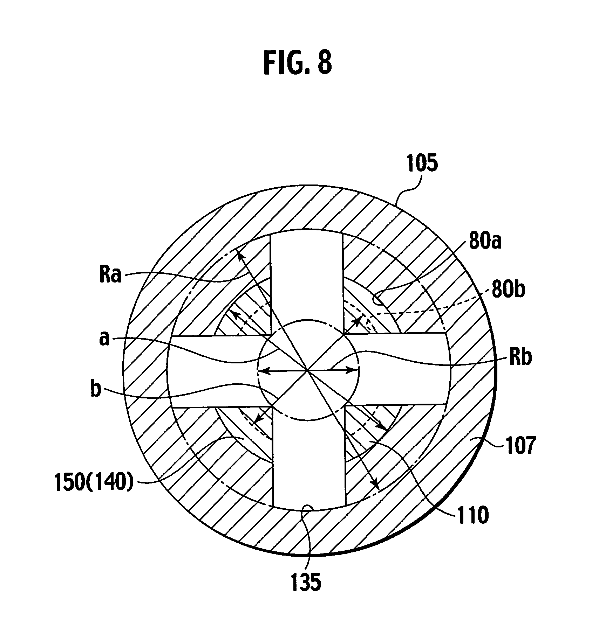

Although not illustrated in Fig.6, plastic from the bottom portion 106 of the closed-end hole 104 of the lower boss 107 to the end portion of the upper boss 110 is melted, so that molten plastic 140 (see Fig.8) is formed in the gaps between the lower boss 107 as well as the upper boss 110, and the concave portion 3 of the welding head 1. A portion where the plastic of the lower boss 107 is melted and a portion where the plastic of the upper boss 110 is melted are mixed into each other at a portion where the both are in contact with each other. After the ultrasonic vibration of the welding head 1 stops, the molten plastic 140 is solidified and fixed to the inner circumferential surfaces of the lower boss 107 and the upper boss 110. The formation of the molten plastic 140 and the fixation to the inner circumferential surfaces of the lower boss 107 and the upper boss 110 will be described in detail using Fig.7 and Fig.8. In the first embodiment, as the ultrasonic welding conditions, the pressure for inserting the welding head 1 is set to approximately 40 psi, the welding time is set to approximately 0. 6 sec, and the holding time (corresponding to the cool-down time for solidification of the molten plastic 140) after stopping the ultrasonic vibration is set to approximately 0.3 sec.

Fig.7 and Fig.8 are horizontal cross-sectional views when the joint portion 105 is viewed from the opening 112 side of the lower boss 107 in the state illustrated in Fig. 6,
wherein Fig.7 illustrates a state before welding the joint portion 105 while Fig.8 illustrates a state after welding the joint portion 105.

As described above, the relation of a≥b, Ra>a, and Rb<b is satisfied, and therefore, as shown in Fig.7, when the welding head 1 is inserted into the joint portion 105, the convex portion 2 of the welding head 1 bites into the lower boss 107 and the upper boss 110. In the state before the plastic is melted, a void portion 80a is formed between the concave portion 3 of the welding head 1 and the lower boss 107, and a void portion 80b is formed between the concave portion 3 and the upper boss 110.

Then, when the lower boss 107 and the upper boss 110 are melted due to vibration energy by the ultrasonic vibration of the welding head 1, the molten plastic 140 melted from both the lower boss 107 and the upper boss 110 will extend to the void portions 80a, 80b, as shown in Fig.8. When the ultrasonic vibration of the welding head 1 is stopped and the welding head 1 is retreated from the joint portion 105, the molten plastic 140 will be fixed to each inner surface of the lower boss 107 and the upper boss 110 integrally with the each inner surface, and then turn into solidified plastic 150. A void portion 135 having a substantially crisscross cross-section is formed in the joint portion 105.

The molten plastic 140 extends so as to span the lower boss 107 and the upper boss 110, and as shown in Fig. 8, when solidified, the molten plastic 140 turns into the solidified plastic 150 projecting inside the lower boss 107 and the upper boss 110. The solidified plastic 150 is a convex portion, which projects in the central direction of the lower boss 107 and the upper boss 110 from each inner surface of the lower boss 107 and the upper boss 110, and the solidified plastic 150 faces the void portion 135. In the example illustrated in Fig.8, the solidified plastic 150 projects so as to fill the whole void portions 80a, 80b, however, the solidified plastic 150 may not fill the whole of them depending on the sizes of the void portions 80a, 80b or on the amount of molten plastic.

As seen from the above description, according to the welding method (method of a manufacturing plastic component assembly) of the first embodiment, the molten plastic 140 is the one formed by joining and integrating a portion melted from the lower boss 107 and a portion melted from the upper boss 110, and the solidified plastic 150 extending so as to span the lower boss 107 and the upper boss 110 is formed. Accordingly, the solidified plastic 150 serves as a reinforcement portion for reinforcing the joint between the lower boss 107 and the upper boss 110. As a result, the joint strength of the joint portion 105 is improved significantly.

According to the first embodiment, due to the joint by ultrasonic welding, the joint strength to the extent that can pass reliability tests can be obtained and therefore the ultrasonic welding can be used as an alternative to the tap screw. The joint strength according to the first embodiment will be described later including joint strengths according to other embodiments. The cassette 100a (see Fig.1) as a plastic component assembly, in which the lower half 102 and the upper half 103 are joined using the welding method of the first embodiment, can be obtained.

### (Second Embodiment)

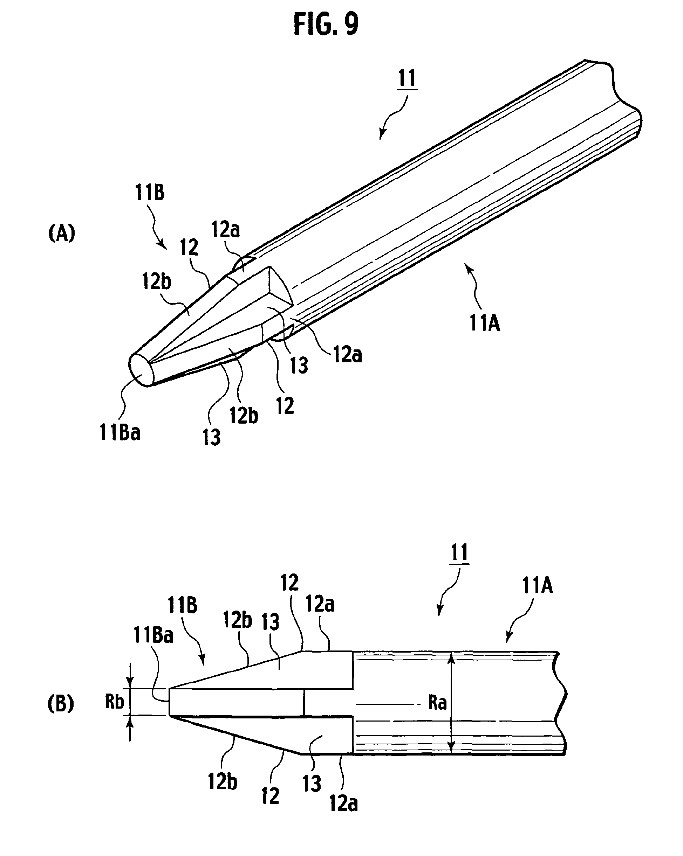

Fig.9 illustrates a second embodiment of the welding head used to implement the method of manufacturing a plastic component assembly of the present invention. Fig.9(A) is a perspective view illustrating a welding head 11 of the second embodiment, while Fig. 9 (B) is a side view of the welding head 11. For the description on the operational effects achieved by the second embodiment, the same one as the operational effect achieved by the first embodiment is omitted as appropriate. Moreover, since the examples of preferable configuration described in the first embodiment can be applied similarly also in the second embodiment, the description thereof is omitted as appropriate.

As shown in Figs. 9 (A) and 9 (B) , the welding head 11 has a substantially cylindrical contour, and includes a cylindrical root portion 11A, and an end portion 11B having the later-described shape unique to the second embodiment. The end portion 11B is integrally continuous to the root portion 11A. The end portion 11B has such a shape that the diameter of the convex portion 2 of the end portion 1B of the welding head 1 shown in Fig.3 gradually becomes smaller toward the end thereof. The end portion 11B of the welding head 11 includes four convex portions 12 radially projecting from the center of the cylinder, and four concave portions 13 between two adjoining convex portions 12.

Here, the convex portion 12 includes: a first portion 12a having the same diameter as that of the root portion 11A and being formed continuous to the root portion 11A; and a tapered second portion 12b whose diameter gradually becomes smaller from the first portion 12a to an end surface 11Ba. The second portion 12b is a taper portion. The end surface 11Ba has a diameter Rb of an incircle contacting a position (corresponding to the point Q in Fig.3(B)) of the nearest concave portion 13 from a cylindrical center point. The welding head 11, in which the end portion 11B having the convex portion 12 and the concave portion 13 is formed, can be manufactured by machining the end portion 1B of the welding head 1 of the first embodiment into shapes as illustrated in Figs. 9 (A) and 9 (B). Also in the second embodiment, Ra is set to 2.0 mm and Rb to 0.49 mm.

The configuration of an ultrasonic welding machine for ultrasonically welding the lower half 102 and the upper half 103 to each other using the welding head 11 is the same as that of the ultrasonic welding machine 500 described in Fig. 5. The welding head 11 may be used in place of the welding head 1 in Fig.5.

The method of joining the lower half 102 and the upper half 103 to each other using the welding head 11 is the same as the one described using Fig.6 to Fig.8. The ultrasonic welding conditions in the second embodiment are the same as those of the first embodiment.

Incidentally, in ultrasonically welding a pair of plastic components to each other using the welding head 1 of the first embodiment, a concern is that an unpleasant sound or an unnecessary vibration may occur. In contrast to this, in the ultrasonic welding using the welding head 11 of the second embodiment, since the convex portion 12 is in a shape having the tapered second portion 12b, the vibration energy can be radially transmitted more uniformly and efficiently and thus the unpleasant sound and the unnecessary vibration can be reduced.

Moreover, since the diameter Rb of the end surface 11Ba is smaller than the diameter "a" of the through-hole 108 of the lower boss 107, the end surface 11Ba can be smoothly inserted into the interior of the through-hole 108. Accordingly, the vibration energy can be uniformly applied to the surface where the lower boss 107 and the upper boss 110 contact the welding head 11.

Furthermore, since the welding head 11 of the second embodiment is in such a shape that the convex portion 12 has the tapered second portion 12b, it achieves the following effects as compared with the welding head 1 of the first embodiment. When the ultrasonic welding is performed using the welding head 1, such a force that the welding head 1 presses the lower boss 107 against the upper boss 110 side occurs while the end surface 1Ba of the welding head 1 is passing through the interior of the lower boss 107, but this force will decrease after the end surface 1Ba of the welding head 1 passed through the interior of the lower boss 107. Accordingly, if the welding head 1 is used, the lower half 102 may separate from the upper half 103 and therefore the lower half 102 may need to be pressed against the upper half 103 by means of another instrument than the welding head 1. In contrast to this, if the welding head 11 is used, a force for pressing the lower boss 107 against the upper boss 110 side will continue to work by the tapered second portion 12b even after the end surface 11Ba passed through the interior of the lower boss 107. Accordingly, the lower half 102 seldom separates from the upper half 103, and there is no need to press the lower half 102 against the upper half 103 by means of another instrument than the welding head 11.

Using the welding method of the second embodiment as described above, a cassette 100b (see Fig.1) as a plastic component assembly in which the lower half 102 and the upper half 103 are joined can be obtained. The joint portion 105 in this cassette 100b has a void portion, such as the void portion 135 having a substantially crisscross cross-section described in Fig.8, as in the cassette 100a using the welding method of the first embodiment. However, since the diameter of the end portion 11B of the welding head 11 gradually becomes smaller toward the end, a void portion biting into the lower boss 107 and the upper boss 110 is formed by the convex portion 12 biting into the lower boss 107 and the upper boss 110, only in the vicinity of the bottom portion 106 of the lower boss 107 as well as the top end portion of the upper boss 110.

The joint strength of the joint portion 105 in the cassette 100b using the welding method of the second embodiment is larger than that of the joint portion 105 in the cassette 100a using the welding method of the first embodiment due to the difference in the force for pressing the lower boss 107 against the upper boss 110 side, between the welding head 1 and welding head 11 described above. The difference in the joint strength between the first embodiment and the second embodiment will be described in detail later.

### (Third Embodiment)

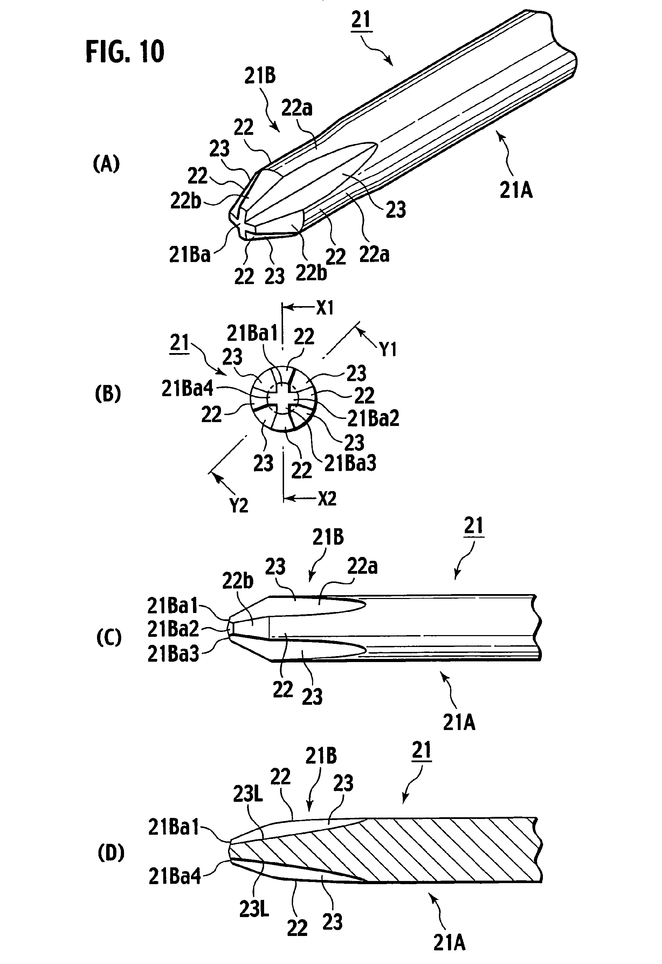

Fig.10 illustrates a third embodiment of the welding head used to implement the method of manufacturing a plastic component assembly of the present invention. Fig.10(A) is a perspective view illustrating a welding head 21 of the third embodiment, Fig.10 (B) is a plan view when the welding head 21 is viewed from the end side, Fig. 10 (C) is a plan view when the welding head 21 is viewed from arrows X1, X2 of Fig. 10 (B) , and Fig. 10 (D) is a cross-sectional view when the welding head 21 is cut along a line connecting arrows Y1, Y2 of Fig. 10 (B) . For the description on the operational effects achieved by the third embodiment, the same one as the operational effect achieved by the first or the second embodiment is omitted as appropriate. Moreover, since the examples of preferable configuration described in the first embodiment can be applied similarly also in the third embodiment, the description thereof is omitted as appropriate.

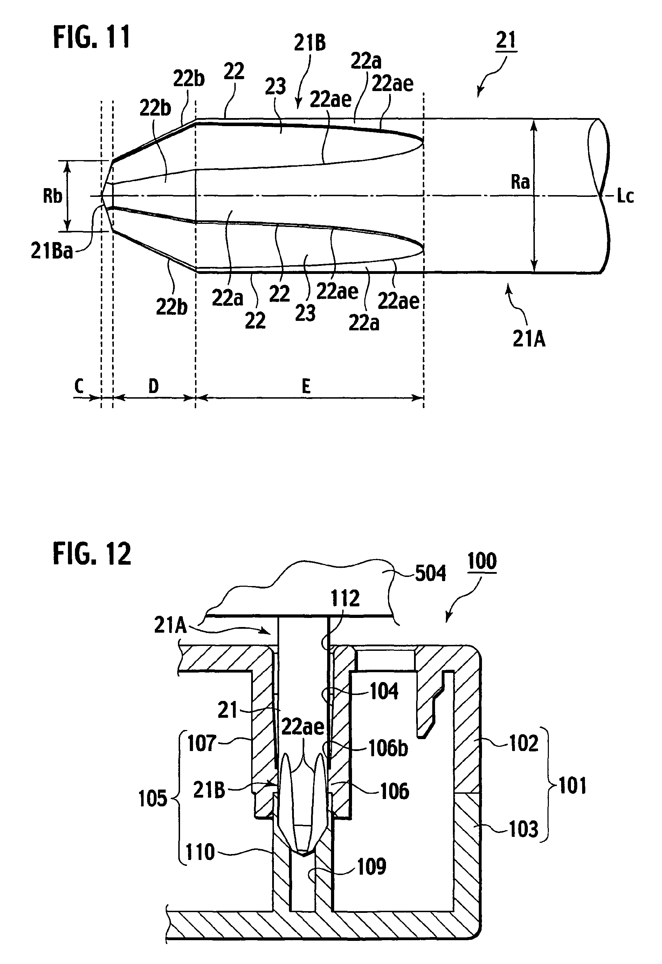

As shown in Fig.10(A), the welding head 21 has a substantially cylindrical contour, and includes a cylindrical root portion 21A and an end portion 21B having the later-described concavo-convex shape unique to the third embodiment. The end portion 21B is integrally continuous to the root portion 21A. The end portion 21B includes four convex portions 22 radially projecting from a center line Lc (See Fig.11) of the cylinder, and four concave portions 23 between two adjoining convex portions 22.

Here, the convex portion 22 includes: a first portion 22a having the same diameter as that of the root portion 21A and being formed continuous to the root portion 21A; and a tapered second portion 22b whose diameter gradually becomes smaller from the first portion 22a to an end surface 21Ba.
The first portion 22a is a taper portion. Note that, to be exact, as seen from Fig. 10 (D) , a portion on the second portion 22b side of the first portion 22a is in such a tapered shape that the diameter thereof gradually becomes smaller slightly. The end surface 21Ba of the end portion 21B is substantially crisscross.

The depth of the concave portion 23 gradually becomes shallower toward the root portion 21A side from the end surface 21Ba side, and the concave portion 23 is connected with the root portion 21A. As seen from Fig. 10 (D), a valley floor line 23L, which is the innermost portion of the concave portion 23, draws such curve that departs from the center line Lc of the cylinder toward the root portion 21A side from the end surface 21Ba side. The concave portion 23 is also a taper portion whose diameter becomes larger toward the root portion 21A side from the end surface 21Ba side.

As shown in Fig.10(B), the end surface 21Ba has four surfaces 21Ba1 to 21Ba4 radially projecting from the center line Lc of the cylinder. The end surface 21Ba having these four surfaces 21Bal to 21Ba4 is not on a single plane, but as seen from Figs. 10 (C) and 10(D), it has a tapered surface inclined in the direction of the root portion 21A. The surfaces 21Ba1 to 21Ba4 are referred to as the tapered surfaces 21Ba1 to 21Ba4. The tapered surfaces 21Ba1 to 21Ba4 are also a taper portion. The tapered surfaces 21Ba1 to 21Ba4 are connected with the second portion 22b of the convex portion 22. The welding head 21, in which the end portion 21B having the convex portions 22 and the concave portions 23 is formed, can be manufactured by machining the end portion 1B of the welding head 1 of the first embodiment into the shapes as illustrated in Figs.10(A) to 10(D).

The shape of the end portion 21B is further described using Fig.11. In Fig.11, the end surface 21Ba is positioned within a range C from the end of the welding head 21. The second portion 22b of the convex portion 22 is positioned within a range D on the root portion 21A side than the range C. An angle which the end surface 21Ba (tapered surfaces 21Ba1 to 21Ba4) and the center line Lc form is larger than an angle which the surface of the second portion 22b and the center line Lc form. That is, the end surface 21Ba has a relatively sharp inclination angle relative to the center line Lc, while the second portion 22b has an inclination angle gentler than that of the end surface 21Ba.

Moreover, within a range E on the root portion 21A side than the range D, for the width of an apex of the first portion 22a in the convex portion 22, as nearing toward the root portion 21A side from the second portion 22b side, the width (length in the direction perpendicular to the center line Lc) gradually becomes wider, while the width of the concave portion 23 gradually becomes narrower. Both side edge portions 22ae, 22ae (edges in the direction perpendicular to the center line Lc) of the apex of the first portion 22a within the range E are inclined relative to the center line Lc. Although the diameter of the side edge portion 22ae is approximately constant, the side edge portion 22ae is a taper portion inclined relative to the moving direction of the welding head 21 on the circumferential surface. The diameter Ra of the root portion 21A is 2.0 mm, which is the same as that of the welding head 1 of the first embodiment. The length Rb illustrated in Fig.11 is the diameter of the circumcircle of the end surface 21Ba indicated as a dashed line in Fig. 10 (B), and is set to 0.8 mm in the welding head 21 of the third embodiment.

The configuration of an ultrasonic welding machine for ultrasonically welding the lower half 102 and the upper half 103 to each other using the welding head 21 is the same as that of the ultrasonic welding machine 500 described in Fig. 5.
The welding head 21 may be used in place of the welding head 1 in Fig.5.

The method of joining the lower half 102 and the upper half 103 to each other using the welding head 21 is the same as the one described using Fig.6 to Fig.8. Fig.12 illustrates a state where the welding head 21 is inserted to predetermined positions inside the lower boss 107 and the upper boss 110. Note that, also in Fig.12, for ease of understanding, the container 101 is illustrated as a cross-sectional view and the welding head 21 is illustrated as a side view. The ultrasonic welding conditions in the third embodiment are the same as those of the first and second embodiments.

In the ultrasonic welding using the welding head 21 of the third embodiment, since the end surface 21Ba has the tapered surfaces 21Bal to 21Ba4 and the convex portion 22 is also in a shape having the tapered second portion 22b, the vibration energy can be radially transmitted more uniformly and efficiently and thus the unpleasant sound and the unnecessary vibration can be reduced.

Moreover, since the diameter Rb of the circumcircle of the end surface 21Ba is smaller than the diameter "a" of the through-hole 108 of the lower boss 107, the end surface 21Ba can be smoothly inserted into the interior of the through-hole 108. Accordingly, the vibration energy can be uniformly applied to the surface where the lower boss 107 and the upper boss 110 contact the welding head 11.

Furthermore, in the welding head 21 of the third embodiment, a force for pressing the lower boss 107 against the upper boss 110 side continues to work by the tapered second portion 22b even after the end surface 21Ba passed through the interior of the lower boss 107. In the welding head 21, in addition to this, even after the second portion 22b passed through the interior of the lower boss 107, a force for pressing the lower boss 107 against the upper boss 110 side continues to work by the taper portion of the side edge portion 22ae of the apex of the first portion 22a. Moreover, the concave portion 23 is also tapered and therefore in the state where the lower boss 107 or the upper boss 110 is in contact with the bottom portion of the concave portion 23, a force for pressing the lower boss 107 against the upper boss 110 side is generated also by the concave portion 23.
Accordingly, the welding head 21 of the third embodiment is more effective than the welding head 11 of the second embodiment in that the welding head 21 generates a force for pressing the lower boss 107 against the upper boss 110 side.

As shown in FIG.12, in a state where the welding head 21 is inserted into the innermost position of the upper boss 110, the side edge portion 22ae of the apex of the first portion 22a is preferably positioned to span the upper surface 106b of the bottom portion 106 of the closed-end hole 104 in the lower boss 107. That is, the edge on the root portion 21A side of the concave portion 23 is positioned so as not to go over the upper surface 106b of the bottom portion 106. In this manner, a pressing force by the side edge portion 22ae (or, in addition to this, the concave portion 23) continues to occur until the welding head 21 is inserted to the innermost position of the upper boss 110. In the welding head 21 of the third embodiment, within the whole range of the end portion 21B, the diameter becomes larger toward the root portion 21A side from the end surface 21Ba side, or the end portion 21B is a taper portion inclined relative to the moving direction of the welding head 21 on the circumferential surface although the diameter is the same. Accordingly, a force for the welding head 21 to press the lower boss 107 against the upper boss 110 side will occur during the entire period after the welding head 21 abuts against the bottom portion 106 of the closed-end hole 104 until it reaches the innermost position of the upper boss 110.

Using the welding method of the third embodiment as described above, a cassette 100c (see Fig.1) as a plastic component assembly, in which the lower half 102 and the upper half 103 are joined, can be obtained. The joint portion 105 in the cassette 100c has a void portion, such as the void portion 135 having a substantially crisscross cross-section described in Fig.8, as in the cassettes 100a, 100b using the welding method of the first and the second embodiments.

The joint strength of the joint portion 105 in the cassette 100c using the welding method of the third embodiment is larger than that of the joint portion 105 in the cassette 100a using the welding method of the first embodiment due to the difference in the force for pressing the lower boss 107 against the upper boss 110 side, between the welding head 11 and welding head 21 described above. Moreover, the joint strength of the joint portion 105 in the cassette 100c using the welding method of the third embodiment is larger than that of the joint portion 105 in the cassette 100b using the welding method of the second embodiment, due to the difference between the welding head 11 and welding head 21 in the forces for pressing the lower boss 107 against the upper boss 110 side due to the difference in the shape of the taper portion between the welding head 11 and welding head 21. The difference in the joint strength between the first and second embodiments and the third embodiment will be described in detail later.

### (Fourth Embodiment)

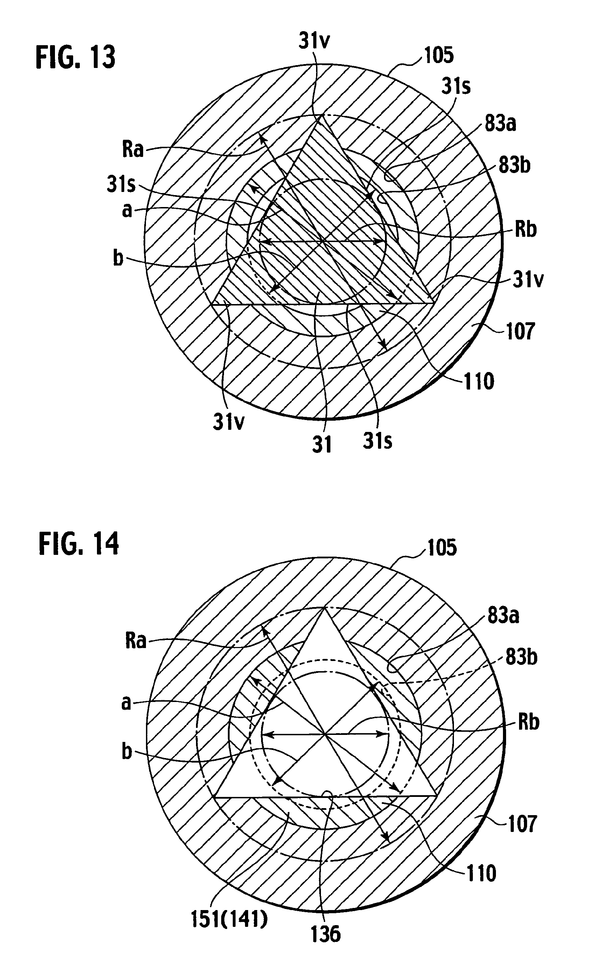

Fig.13 illustrates a fourth embodiment of the welding head used to implement the method of manufacturing a plastic component assembly of the present invention. Fig.13 is a cross-sectional view in a state where a welding head 31 of the fourth embodiment is inserted into the joint portion 105. Fig.13 illustrates a state before welding the joint portion 105, while Fig. 4 illustrates a state after welding the joint portion 105. The welding head 31 of the fourth embodiment has a substantially cylindrical contour as in the welding heads 1, 11 and 21 of the first to the third embodiments. In the first to the third embodiments, the end portions 1B, 11B and 21B have the concavity and convexity circumferentially provided, while in the fourth embodiment, the end portion is formed in the shape of a triangle pole or a triangular pyramid. For the end portion, the triangular pyramid is more preferable, so the description is made assuming Fig.13 illustrates a cross-sectional view of the end portion of the triangular pyramid.

As shown in Fig. 3, the welding head 31 has a diameter Ra of a circumcircle and a diameter Rb of an incircle in one cross section of the end portion having a triangular pyramid shape. The relation of a≥b, Ra>a, and Rb<b is satisfied, as in the first embodiment. Note that, although the diameters Ra, Rb differ depending on the position in the length direction of the welding head 31, these satisfy the above-described relation within a predetermined length range. As shown in Fig.13, when the welding head 31 is inserted into the joint portion 105, three apexes 31v of the welding head 31 bite into the lower boss 107 and the upper boss 110. The apexes 31v are acting as the same convex portion as the convex portions 2, 12, and 22 in the first to the third embodiments. In a state before the plastic is melted, a void portion 83a is formed between three sides 31s of the welding head 31 and the lower boss 107, and a void portion 83b is formed between the three sides 31s and the upper boss 110.

Then, when the lower boss 107 and the upper boss 110 are melted due to vibration energy caused by the ultrasonic vibration of the welding head 31, molten plastic 141 melted from both the lower boss 107 and the upper boss 110 will expand to the void portions 83a, 83b, as illustrated in Fig. 14. When the ultrasonic vibration of the welding head 31 is stopped and the welding head 31 is retreated from the joint portion 105, the molten plastic 141 will be fixed to each inner surface of the lower boss 107 and the upper boss 110 integrally with the each inner surface, and turn into a solidified plastic 151 projecting inside the lower boss 107 and the upper boss 110. A void portion 136 having a triangular cross section is formed in the joint portion 105.

The configuration of an ultrasonic welding machine for ultrasonically welding the lower half 102 and the upper half 103 to each other using the welding head 31 is the same as that of the ultrasonic welding machine 500 described in Fig. 5. The welding head 31 may be used in place of the welding head 1 in Fig.5.

In the fourth embodiment, it is preferable that the void portions 83a at three places between three sides 31s of the welding head 31 and the lower boss 107 have approximately an equal volume and the void portions 83b at three places between three sides 31s and the upper boss 110 have approximately an equal volume. In this manner, the joint can be made uniformly in the circumferential direction of the joint portion 105, and the variation in the joint strength can be reduced. As a modification of the fourth embodiment, a square or a polygon higher than the square may be employed.

In the fourth embodiment, since a portion inserted into the lower boss 107 and the upper boss 110 of the welding head 31 does not have a concave portion in the circumferential direction, a complicated concavo-convex shape will not be formed inside the lower boss 107 and the upper boss 110 unlike in the first to the third embodiments. Therefore, the joint strength according to the fourth embodiment will decrease slightly relative to that of the first to the third embodiments. However, since the molten plastic 141 (solidified plastic 151) serves as a reinforcement portion for reinforcing the joint between the lower boss 107 and the upper boss 110, the joint strength of the joint portion 105 will improve significantly as compared with the conventional example.

### (Evaluation of Joint Strength of Each Embodiment)

Here, among the respective embodiments described above, the joint strengths of the cassette 100a with three convex portions 2 manufactured in the first embodiment illustrated in Fig.3, the cassette 100b manufactured in the second embodiment illustrated in Fig.9, and the cassette 100c manufactured in the third embodiment illustrated in Fig.10 are described. For comparison, a cassette manufactured by screw fastening, which is the conventional joining method, is conveniently referred to as a cassette 200a. In order to evaluate the oint strength of the joint portion 105, a drop test for the cassettes 100a, 100b, 100c, and 200a was conducted, respectively. The test method of the drop test is as follows.

Ten pieces of cassettes 100a, 100b, and 100c manufactured in the first embodiment to the third embodiment, and the cassettes 200a as a comparative example were prepared, respectively, and these were dropped from a position 100 cm high under room temperature so that the respective surfaces of each cassette may hit against the top surface of a hard wood slab placed on a floor once each time. That is, one cassette was dropped once in each direction of arrows xa, xb, ya, yb, za, and zb in Fig.1, i.e., a total of 6 times in one cassette, and the appearance of the cassette was observed for each time. A case where the lower half 102 and the upper half 103 separates from each other or a looseness occurs after the drop is defined as defect (NG), and out of ten samples, the number of samples resulting in defect was counted. The result of this drop test is as shown in Table 1.

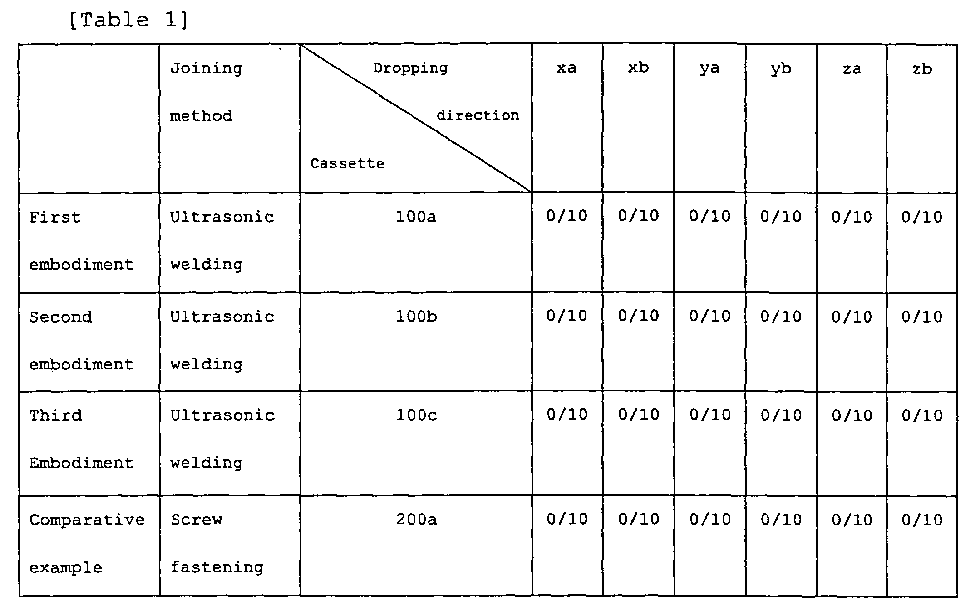

In Table 1, the number shown in each box of the dropping directions xa to zb indicates the number of NG in the total ten samples.

As seen from Table 1, for all the cassettes 100a, 100b, and 100c manufactured in the first embodiment to the third embodiment and the cassette 200a manufactured by screw fastening, the number of NG is 0. It is confirmed that the cassettes 100a, 100b, and 100c manufactured in the first embodiment to the third embodiment have sufficient strength to withstand the drop test as the cassette 200a manufactured by screw fastening has.

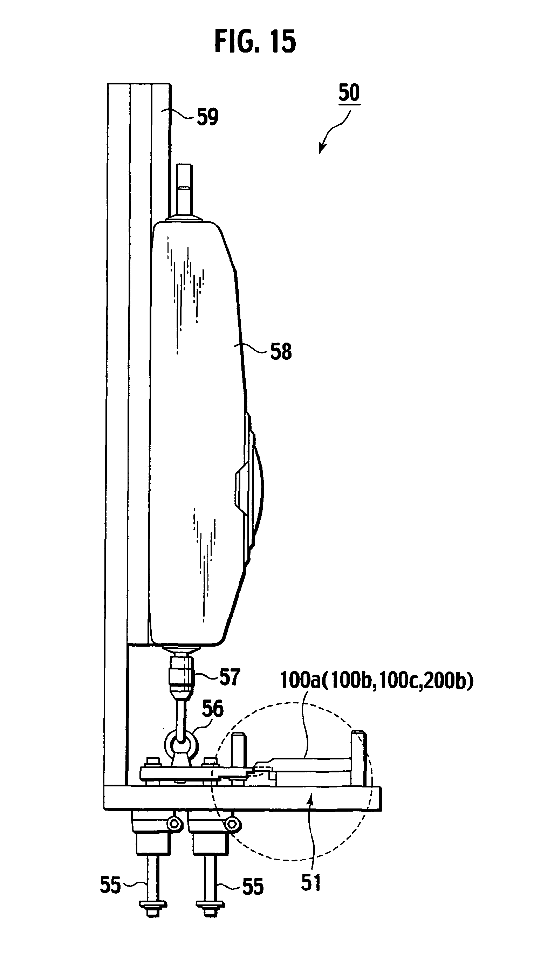

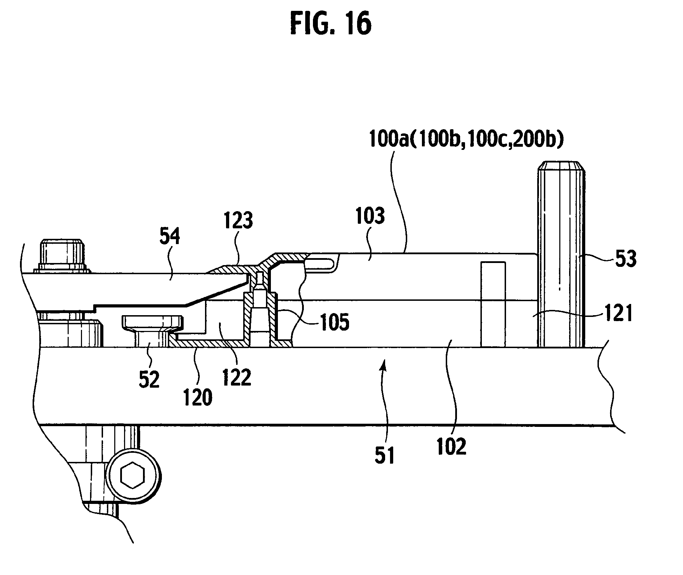

Furthermore, a cassette that was ultrasonically welded using the cylindrical welding head not having a concavity and convexity in the end portion is conveniently referred to as a cassette 200b. In order to quantitatively measure and evaluate the joint strength of the joint portion 105, a peeling test for 100a, 100b, 100c, and 200b was conducted, respectively. The peeling test was conducted using a peel tester 50 illustrated in Fig. 15 and Fig .16. Fig. 15 is a side view showing a schematic configuration of the peel tester 50, and Fig. 16 is an enlarged side view of a partial cutaway of a portion surrounded by a circle of dashed line in Fig. 5. The test method of the peeling test is as follows. Note that, since all the test methods for the sets 100a, 100b, 100c, and 200b are the same, only the set 100a is described. The sets 100a, 100b, 100c, and 200b illustrated in Fig.15 and Fig. 16 are in a state where the opening and closing lid 131 illustrated in Fig.1 is removed.

In Fig.15 and Fig.16, the cassette 100a is fixed to a cassette holding part 51 of the peel tester 50. For the cassette 100a, a front edge portion 120 of the lower half 102 is locked by a hooking part 52 of the cassette holding part 51 and at the same time a rear edge portion 121 is abutted against a pressing part 53, and thereby the lower half 102 is fixed to the cassette holding part 51. In fixing the cassette 100a to the cassette holding part 51, a claw part 54 is inserted into the interior of a front part 122 of the cassette 100a so as to be abutted against an inner surface of a front edge portion 123 of the upper half 103. The claw part 54 is connected to two guide pins 55. Moreover, the claw part 54 is connected to a hook 56 between the two guide pins 55, and the hook 56 is connected to a shaft 57 of a measuring section 58. The measuring section 58 moves upwardly or downwardly along a sliding plate 59 so that the claw part 54 can move in the vertical direction.

Then, the measuring section 58 is moved in the direction (upward of Fig.15) to space apart from the cassette 100a at a predetermined speed, along the surface of the sliding plate 59. Then, the claw part 54 peels off the front edge portion 123 of the upper half 103 from the front edge portion 120 of the lower half 102. Note that, for the sample of the cassette 100a used in the peeling test, for ease of measurement, a component, such as the videotape 130, is not housed in the container 1, and the sample was used, in which only one joint portion 105 adjacent to the claw part 54 among a plurality of joint portions 105 in the cassette 100a is ultrasonically welded and the other joint portions 105 are not ultrasonically welded.

The measuring section 58 is provided with a measuring instrument for measuring a force for peeling off the joint portion 105, i.e., the joint strength of the joint portion 105. As this measuring instrument, Push Pull Gage (type number MP-10) manufactured by Aikoh Engineering Co., Ltd. was used. The load applied on the claw part 54 was measured using the measuring instrument over time while raising the measuring section 58, and the maximum load was defined as the joint strength of the joint portion 105. As seen from Fig.16, since the end of the claw part 54 is positioned in the vicinity of the joint portion 105 of the cassette 100a, the joint strength can be measured accurately.

Through the above measurement procedure, the peeling test was conducted for ten pieces of the cassettes 100a, 100b, 100c, and 200b, respectively. The result of this peeling test is as shown in Table 2.

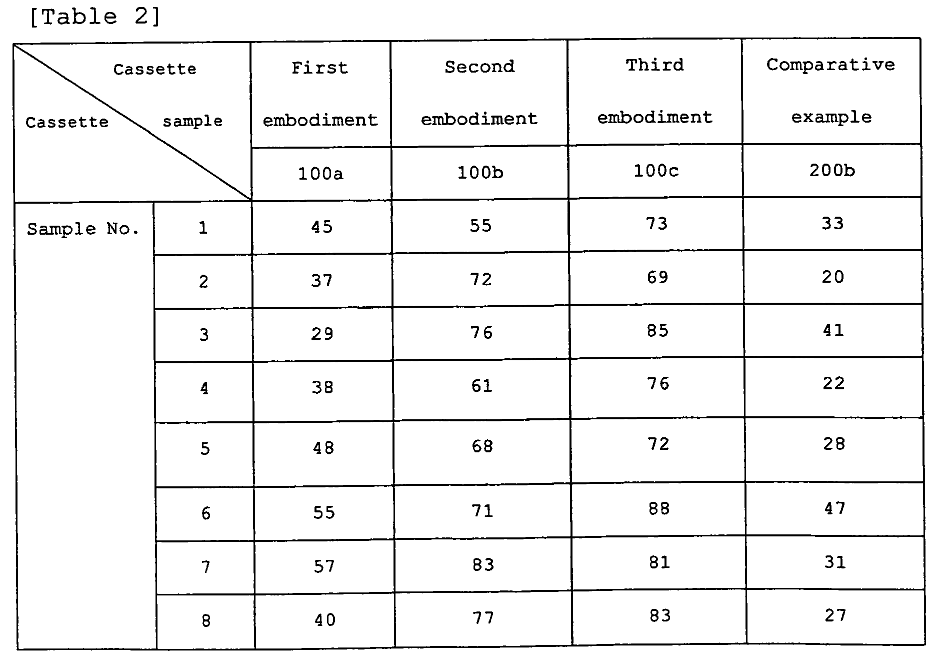

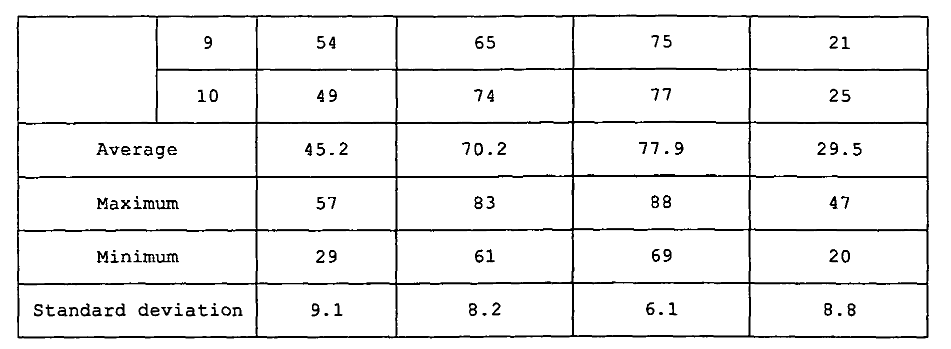

In Table 2, the number shown in each box indicates the joint strength (in the unit of Newton (N)) of the joint portion 105.

As seen from Table 2, all the joint portions 105 of the cassettes 100a, 100b, and 100c manufactured in the first embodiment to the third embodiment have a significantly large joint strength as compared with the joint portion 105 of the cassette 200b of the comparative example. The joint strength of the cassette 100b is larger than that of the cassette 100a due to the pressing force by the second portion 12b of the convex portion 12, which is the taper portion, as described above. Moreover, the joint strength of the cassette 100c is larger than that of the cassette 100b because a plurality of kinds of taper portions is formed in the convex portion 22 and a taper portion is also formed in the concave portion 23. When all the joint portions 105 are ultrasonically welded, the joint strength becomes larger than the values shown in Table 2 and the joint strengths of the cassettes 100a, 100b, and 100c (container 101) as the whole are extremely high.

From the result of the drop test and the measurement result of the joint strength by the peeling test as described above, it is understood that the method of manufacturing a plastic component assembly of the present invention using the welding method of each embodiment can be used as an alternative to the conventional manufacture method using screw fastening. Therefore, a conventional plastic component assembly using screw fastening can be replaced with a plastic component assembly of the present invention manufactured using the welding method of each embodiment.

The present invention is not limited to each embodiment described above, and various modifications may be made without departing from the scope and spirit of the present invention.

In each embodiment described above, the example of welding the container 101, in which the through-hole 108 is formed in the bottom portion 106 of the lower boss 107 and the closed-end hole 109 is formed also in the upper boss 110, has been shown, however, the present invention is not limited thereto. Even in the case where the hole is formed only in either one of the lower boss 107 and the upper boss 110 or in the case where the hole is not formed in both of the lower boss 107 and the upper boss 110, the welding method (method of manufacturing a plastic component assembly) of the present invention can be employed.

### Industrial Applicability

The present invention can be applied to all the cases where a plurality of plastic components having thermoplasticity is welded to each other by ultrasonic waves or heat.

## Claims

1. A method of manufacturing a plastic component assembly (100) in which a first and a second plastic components (102, 103) having thermoplasticity are integrated to form a plastic component assembly (100), the method comprising:
inserting a welding head (1, 1', 11, 21) used for ultrasonic or heat welding so as to span a joint portion (105) where the first and the second plastic components (102, 103) abut to each other, the welding head (1, 1', 11, 21) having a plurality of convex portions (2, 12, 22) formed in a circumferential direction, the convex portions (2, 12, 22) extending in a longitudinal direction within a range of a predetermined length;
melting a plastic in the joint portion (105) by means of the welding head (1, 1', 11, 21); and
solidifying the molten plastic and thereby causing the first and the second plastic components (102, 103) to be welded to and integrated with each other.

2. The method of manufacturing a plastic component assembly (100) according to claim 1, wherein the welding head (1, 1', 11, 21) having a plurality of concave portions (3, 13, 23) formed in a circumferential direction in addition to the convex portions (2, 12, 22), the concave portions (3, 13, 23) extending in a longitudinal direction within a range of a predetermined length, is used as the welding head (1, 1' , 11, 21).

3. The method of manufacturing a plastic component assembly (100) according to claim 1 or 2, wherein:
the first plastic component (102) includes a first boss (107) having a hole (108) with a first inner diameter (a) formed in a bottom portion (106);
the second plastic component (103) includes a second boss (110) with a second inner diameter (b) not greater than the first inner diameter (a);
the joint portion (105) includes a portion (106a, 110a) where the bottom portion (106) of the first boss (107) and the second boss (110) abut to each other; and
the welding head (1, 1', 11, 21), in which a diameter (Ra) of a circumcircle circumscribing the plurality of convex portions (2, 12, 22) is larger than the first inner diameter (a) at least at a part within the range of the predetermined length, is used as the welding head (1, 1', 11, 21).

4. The method of manufacturing a plastic component assembly (100) according to claim 2, wherein the welding head (1, 1', 11, 21), in which a diameter (Rb) of a circle contacting the respective innermost portions (Q) of the plurality of concave portions (3, 13, 23) is smaller than the second inner diameter (b) at least at a part within the range of the predetermined length, is used as the welding head (1, 1', 11, 21).

5. The method of manufacturing a plastic component assembly (100) according to any one of claims 1 to 4, wherein the welding head (11, 21), in which a taper portion (12b, 22b) whose diameter becomes smaller toward an end of the welding head (11, 21) is formed in the plurality of convex portions (12, 22) at least at a part within the range of the predetermined length, is used as the welding head (11, 21).

6. The method of manufacturing a plastic component assembly (100) according to any one of claims 1 to 5, wherein the welding head (21) , in which a side edge portion (21Ba1, 21Ba2, 21Ba3, 21Ba4) of a top surface (21Ba) of the plurality of convex portions (22) is inclined relative to a center line (Lc) in a longitudinal direction of the welding head (21) at least at a part within the range of the predetermined length, is used as the welding head (21).

7. The method of manufacturing a plastic component assembly according to claim 2 or 4, wherein the welding head (21), in which the respective innermost portions (23L) of the plurality of concave portions (23) have a diameter becoming smaller toward an end of the welding head (21) at least at a part within the range of the predetermined length, is used as the welding head (21).

8. A plastic component assembly (100) comprising:
a first plastic component (102) having thermoplasticity; and
a second plastic component (103) having thermoplasticity and integrated with the first plastic component (102): wherein
the first and second plastic components (102, 103) are joined to each other at a joint portion (105) where the first and second plastic components (102, 103) abut to each other;
a void portion (80a, 80b) spanning the first and second plastic components (102, 130) is formed in the joint portion (105); and
a solidified plastic (150) faces the void portion (80a, 80b) integrally with the first and second plastic components (102, 103) so as to span the first and second plastic components (102, 103), the solidified plastic (150) being obtained by solidifying a molten plastic (140) in which the first and second plastic components (102, 103) are melted.

9. The plastic component assembly (100) according to claim 8, wherein:
the first plastic component (102) includes a first boss (107) having a hole (108) with a first inner diameter (a) formed in a bottom portion (106);
the second plastic component (103) includes a second boss (110) with a second inner diameter (b) not greater than the first inner diameter (a);
the joint portion (105) includes a portion (106a, 110a) where the bottom portion (106) of the first boss (107) and the second boss (110) abut to each other;
the void portion (80a, 80b) extends over the second boss (110) from the bottom portion (106) of the first boss (107); and
the solidified plastic (150) extends over the second boss (110) from the bottom portion (106) of the first boss (107).

10. The plastic component assembly (100) according to claim 8 or 9, wherein the void portion (80a, 80b) includes a plurality of convex portions and a plurality of concave portions in a circumferential direction.

11. A plastic component welding head (1, 1', 11, 21) used for welding a first and a second plastic components (102, 103) having thermoplasticity by ultrasonic waves or heat, the plastic component welding head (1, 1', 11, 21) comprising:
a cylindrical root portion (1A, 11A, 21A); and
an end portion (1B, 11B, 21B) integrally continuous to the root portion (1A, 11A, 21A), wherein
the end portion (1B, 11B, 21B) has a plurality of convex portions (2, 12, 22) and a plurality of concave portions (3, 13, 23) in a circumferential direction, the convex portions (2, 12, 22) and the concave portions (3, 13, 23) extending within a range of a predetermined length in a longitudinal direction.

12. The plastic component welding head (11, 21) according to claim 11, wherein the plurality of convex portions (12, 22) has a taper portion (12b, 22b), a diameter of which becomes smaller toward an end of the plastic component welding head (11, 21), at least at a part within a range of the predetermined length.

13. The plastic component welding head (21) according to claim 12, wherein
the taper portion (22b) includes:
a first taper portion (21Ba1, 21Ba2, 21Ba3, 21Ba4) positioned on an end side of the plastic component welding head (21) and inclined with a first inclination angle; and
a second taper portion (22b) positioned on the root portion (21A) side than the first taper portion (21Ba1, 21Ba2, 21Ba3, 21Ba4) and inclined with a second inclination angle gentler than the first inclination angle.

14. The plastic component welding head (21) according to any one of claims 11 to 13, wherein a side edge portion (21Ba1, 21Ba2, 21Ba3, 21Ba4) of a top surface (21Ba) of the plurality of convex portions (22) is inclined relative to a center line (Lc) in a longitudinal direction of the plastic component welding head (21) at least at a part within the range of the predetermined length.

15. The plastic component welding head (21) according to any one of claims 11 to 14, wherein for the respective innermost portions (23L) of the plurality of concave portions (23), a diameter thereof becomes smaller toward an end of the plastic component welding head (21) at least at a part within the range of the predetermined length.

16. A plastic component welding machine (500) used for welding a first and a second plastic components (102, 103) having thermoplasticity by ultrasonic waves, the plastic component welding machine (500) comprising:
an oscillator (501) that generates an electrical oscillation signal (Seo);
an ultrasonic vibration generator (505) that generates a mechanical ultrasonic vibration (Ss) based on the oscillation signal (Seo); and
a welding head (1, 1', 11, 21), the welding head (1, 1', 11, 21) provided integrally with the ultrasonic vibration generator (505) or attached as a separate component to the ultrasonic vibration generator (505), that ultrasonically welds the first and second plastic components (102, 103) by the ultrasonic vibration (Ss), wherein
the welding head (1, 1', 11, 21) includes:
a cylindrical root portion (1A, 11A, 21A); and
an end portion (1B, 11B, 21B) integrally continuous to the root portion (1A, 11A, 21A), and wherein
the end portion (1B, 11B, 21B) has a plurality of convex portions (2, 12, 22) and a plurality of concave portions (3, 13, 23) in a circumferential direction, the convex portions (2, 12, 22) and the concave portions (3, 13, 23) extending within a range of a predetermined length in a longitudinal direction.

17. The plastic component welding machine (500) according to claim 16, wherein the plurality of convex portions (12, 22) has a taper portion (12b, 22b) , a diameter of which becomes smaller toward an end of the welding head (11, 21), at least at a part within a range of the predetermined length.

18. The plastic component welding machine (500) according to claim 17, wherein
the taper portion (22b) includes:
a first taper portion (21Ba1, 21Ba2, 21Ba3, 21Ba4) positioned on an end side of the welding head (21) and inclined with a first inclination angle; and
a second taper portion (22b) positioned on the root portion (21A) side than the first taper portion (21Ba1, 21Ba2, 21Ba3, 21Ba4) and inclined with a second inclination angle gentler than the first inclination angle.

19. The plastic component welding machine (500) according to any one of claims 16 to 18, wherein a side edge portion (21Ba1, 21Ba2, 21Ba3, 21Ba4) of a top surface (21Ba) of the plurality of convex portions (22b) is inclined relative to a center line (Lc) in a longitudinal direction of the welding head (21) at least at a part within the range of the predetermined length.

20. The plastic component welding machine (500) according to any one of claims 16 to 19, wherein for the respective innermost portions (23L) of the plurality of concave portions (23), a diameter thereof becomes smaller toward an end of the welding head (21) at least at a part within the range of the predetermined length.
